# EUROPEAN PATENT SPECIFICATION

(11) **EP 3 598 404 B1**
(45) Date of publication and mention of the grant of the patent: **28.01.2026**
(21) Application number: 19186362.0
(22) Date of filing: 15.07.2019
(51) Int. Cl.: G08B 13/00, G08B 25/00

(54) **A METHOD OF OPERATING AN ALARM SYSTEM FOR A BUILDING, ALARM SYSTEM FOR A BUILDING AND ALARM INSTALLATION**
VERFAHREN ZUM BETRIEB EINES ALARMSYSTEMS FÜR EIN GEBÄUDE, ALARMSYSTEM FÜR EIN GEBÄUDE UND ALARMANLAGE
PROCÉDÉ DE FONCTIONNEMENT D'UN SYSTÈME D'ALARME DE BÂTIMENT, SYSTÈME D'ALARME DE BÂTIMENT ET INSTALLATION D'ALARME

(30) Priority: 16.07.2018 ES 201830713
(43) Date of publication of application: 22.01.2020
(60) Divisional application: 22216854.4
(73) Proprietor: Verisure Sàrl, 1290 Versoix (CH)
(72) Inventor: Morgan, Russell, 1290 Versoix, Geneva (CH); Zander, Johan, 1290 Versoix, Geneva (CH); Nilsson, Christoffer, 1290 Versoix, Geneva (CH); Zielinski, Marcin, 1290 Versoix, Geneva (CH); Thorsander, Simon, 1290 Versoix, Geneva (CH); Westman, Kajsa, 1290 Versoix, Geneva (CH); Dittmer, Jacob, 1290 Versoix, Geneva (CH); Andersson Reimer, Roger, 1290 Versoix, Geneva (CH)
(74) Representative: Dennemeyer & Associates S.A.

(56) References cited:
- EP-A1- 3 118 828
- US-A1- 2007 185 989
- US-A1- 2014 266 699
- US-B1- 6 204 760

## Description

The invention relates to a method of operating an alarm system for a building, to an alarm system for a building and to an alarm installation.

Alarm systems for buildings are generally known. Typically, they comprise a control unit and a couple of intrusion detection devices, in particular magnet sensors which send a signal when a door or a window is being opened. After receipt of such signal, the user has a predefined time period within which he has to disarm or deactivate the alarm system, for example by entering a pin or code. If the alarm system is not deactivated within the predefined time period, the control unit assumes that there is an alarm situation.

For instance, US 6 204 760 B1 discloses a security system for building complexes having multiple units (apartments, or office units, for example) each unit having a unit controller coupled to a plurality of sensors. A main security system controller is coupled to but located remotely from the unit controllers. A security condition in a unit is communicated to the main system controller without significant delay following the sensing of the security condition in the unit. The main controller starts a timer upon whose expiry the main controller generates a main alarm condition unless an invalidation signal has been received from the unit controller. In addition, the relevant unit controller starts a timer within which a user must provide an input to cancel the security condition. If such a user input is received before expiry of the unit timer, the unit controller sends an invalidation signal to the main controller. The unit and main delay periods can be of approximately the same length, but are timed separately by unit controller and main controller, respectively. US 6 204 760 B1 provides a solution to problems associated with previous unit alarms (which did not work in association with a main system controller) in that generally the controllers and user interfaces of such unit alarm installations tend to be integrated into a single device which could easily be destroyed before it could raise an alarm. By immediately alerting the remotely located main system controller of an alarm condition in a unit, subsequent destruction of the unit controller by an intruder cannot prevent an alarm being raised.

Moreover, US 2014/266 699 A1 shows a home security system having multiple sensors and a home security console connected to the sensors. By means of the signals from sensors, console is configured to determine if an alarm should be triggered, and by means of a mobile device of a user, the console may determine that the triggered alarm is a false alarm.

EP3,118,828A1 discloses a security system of a smart home environment arranged to vary the pre-alarm time to reduce the number of false alarms that are triggered by a user. The pre-alarm may be varied according to the user (e.g., different users may have different pre-alarm times). The security system of the smart home environment may vary the pre-alarm time according to the entrance used. That is, there may be different pre-alarm times assigned to different doors of the home that are used for entry. The security system may detect changes in the amount of time a user needs to disarm the security system, and may adjust the amount of pre-alarm time gradually, so as to provide the user sufficient time so as not to feel rushed and to minimize the number of false alarms. For example, the security system may learn that a user needs less time than the set pre-alarm time to disarm the security system, and the system may gradually reduce the amount of pre-alarm time over a period of weeks. In some implementations, the pre-alarm time may be increased when a user is authorized and/or identified by the security system.

US 2007/185989 A1 discloses a video surveillance system which provides information to at least one alarm monitoring centre via a global computer network.

The term "building" here refers to small businesses and homes. These can be houses or flats within a house.

The disadvantage with the known alarm systems is that they respond to different situations in a very static manner.

The object of the invention is to reduce the number of false alarms.

To this end, the invention provides a method of operating an alarm system according to claim 1 and an alarm system according to claim 20.

The invention is based on the concept of adding "intelligence" to the control unit so as to allow the control unit to react to different situations with different responses. This allows the user to interact better with the alarm system, thereby improving the user experience with the alarm system. Further, it allows the operator of the alarm system to more quickly understand if an alarm relates to a true alarm situation or in fact is a false alarm, thereby reducing operation costs for the alarm installation.

The context-based reaction of the control unit depends from the particular intrusion detection device (hereinafter for convenience referred to as "sensor") which sends the signal. Preferably, the sensor(s) associated with the entrance door(s) is/are marked in the control unit as belonging to an expected entry while all other sensors are marked in the control unit as belonging to an unexpected entry. Assuming that the control unit receives a signal from the sensor or one of the sensors associated with the designated entry, the context-based reaction can be a friendly welcome message. Assuming that a signal is received from a sensor associated with an unexpected entry, the context-based reaction can be a request to identify oneself or to enter a pin or code at the user interface. In this second situation, the context-based reaction can also comprise sending a message to the operation center, in particular to a call center where it is added to the queue of incoming calls which require attention, with a low priority being given to this message. Nevertheless, the message is already in the queue so that it can be taken care of very quickly should the predefined time period lapse without the alarm system having been disarmed. The context-based reaction can also depend from the nature of the signal received from the intrusion detection device. Assuming that a "normal" signal is received which indicates that a door was opened, the context-based reaction can be an invitation to the user to disarm the system. Assuming that the signal indicates that there was an attempt to tamper with the sensor or to break a window, the context-based reaction can be a message to the user urging him to check the respective door or window, or can be an alarm message sent to the operation centre.

The context-based reaction of the control unit involves choosing a different length for the time period allowed for disarming the alarm system, depending from the particular intrusion device which sends the signal. Assuming that the user interface is arranged close to the door which is marked in the control unit as designated entry, the predefined time period can be longer than the time period which is available for disarming the alarm system in case a signal is received from a sensor associated with an unexpected entry in the basement.

The context-based reaction can consist in choosing a different tone of the invitation to the user to disarm the alarm system, depending from the particular intrusion detection device which sends the signal. Assuming that the signal is generated by a sensor associated with an expected entry, the tone can be very friendly. Assuming that the signal is received from a sensor associated with an unexpected entry, the tone of the invitation to disarm the alarm system can be more firm.

It is also possible that the context-based reaction is a text message displayed on a screen of the user interface. The text message can be a "welcome home" message, an indication of the status of the alarm system, an acknowledgement that the system has been disarmed, an indication which sensor has triggered a certain alarm status, or any other message which helps understand the user what is currently going on.

As an alternative or in addition to a text message, the context-based reaction can be a voice message delivered via a loudspeaker. The content of such message can basically be the same as with a text message.

These messages can be personalized messages which address the user with his or her name. It is also possible that the message is a warning message.

The context-based reaction can also involve displaying a plurality of options at the user interface and an invitation to the user to click on one of the options. This is in particular advantageous in case there is a certain alarm situation which in fact is a false alarm as this allows the user to "reset" the alarm system so as to prevent that unnecessary action is being taken by the operation center. One example is that a window sensor sends a signal which indicates that there is a strong vibration at one of the windows. The context-based reaction can be an invitation to the user to confirm that there is suspicious activity or to confirm that he is positive that no suspicious activity has occurred (for example because a child has kicked a football against the window). Another scenario is that the smoke detector detects smoke in the kitchen. The context-based reaction can be an invitation to the user to confirm that there might be a fire in the kitchen or to confirm that there is a false alarm (for example because he or she is cooking dinner). The context-based reaction can in the latter scenario also involve disarming the smoke detector for a predefined time period in order to prevent that there will be new false alarms subsequently.

The context-based reaction can also be an alarm sound which is emitted via a loudspeaker or a siren. This reaction can be chosen as an alternative to a voice message which is an invitation to the user to disarm the system, in a scenario where a more severe reaction of the alarm system is required.

According to an embodiment, the volume of the alarm sound is reduced when the presence of a user is detected in the vicinity of the user interface. This reduces the level of stress for the user when he or she has approached the user interface with the intension of disarming the alarm system. Further, it allows the user to more conveniently communicate with personal from the operation center via the user interface in case there is need for personal assistance.

The volume of the alarm sound is reduced for long enough for the user to identify himself e.g. through biometrics or entering a password. If there is no identification within a predefined time period, the volume is again increased.

According to an aspect of the invention, the alarm system is configured such that an alarm (potentially of several) is located near or in the same unit as the alarm peripheral which the user uses to (i) contact the remote monitoring site (ii) control the alarm system. This may be done to save costs, reduce the number of peripherals needed for the system to operate etc.

One of the alarm peripherals which the user uses to contact the remote monitoring site (the operation center) is a unit which comprises one or several microphones, a touch screen and a possibly a video camera. This allows a direct and personal interaction with an operator at a monitoring site.

This unit can be adapted for proximity detection, in particular for detecting the presence of a user. If the presence of a user is detected, the alarm sound can be reduced for some time. Presence of a user can be detected via a passive IR sensor, via an accelerometer, voice recognition, etc.

If this unit with a screen is used as part of the alarm installation, one context-based reaction can be the content of what is displayed on the screen. In an alarm situation, an alarm message is displayed. When the presence of a user is detected, a more welcoming message can be displayed on the screen, inviting the user to connect to the operation center and/or to confirm if there is an alarm situation or if there is a false alarm.

According to the invention, the context-based reaction involves the activation of a camera and optionally also of a microphone. This is advantageous as it allows to distinguish between a true alarm situation and a false alarm. According to the invention, if a sensor associated with a window has sent a signal starting a predefined time period while the alarm system is in a state which corresponds to "nobody at home", the camera and optionally also the microphone is activated upon lapse of the predefined time period to allow personal at the operation center to obtain additional information. Should there be no further activity or noise, it can be assumed that there was a false alarm. Should there be suspicious noise or activity, an alarm can be triggered by the operation center, and guards, an emergency service and/or the police can be notified.

The context-based reaction can also involve sending a note to a remote operation center. The note can involve the nature of the event which triggered an alarm, can comprise a sound sequence and/or a video sequence captured with the microphones and/or a camera of the alarm system, or can comprise information collected from the user by making him choose from options displayed at the user interface.

The context-based reaction can also consist of establishing a communication with an operator at the remote operation center. The operator can then clarify with the user if immediate assistance is necessary, can make suggestions to the user how to best react to the particular situation, or can allow the user to indicate that there was a false alarm.

The context-based reaction can also consist of emitting a distress call to a guard or an emergency service so that personal assistance is provided as quickly as possible. The control unit preferably takes into account signals from other sensors, such as a smoke detector, a proximity sensor at the user interface, an anti-tampering sensor at the user interface or the control unit, etc. The more information is available to the control unit, the higher the likelihood that the context-based reaction is appropriate to the particular situation.

The context-based reaction can be the interaction with a predefined cell phone. In particular, the reaction can involve calling a first cell phone and then, if there is no response, a second, a third, etc. cell phone until someone is reached.

The context-based reaction can also involve an hand-over of the communication to a cell phone. This is particular advantageous in situations in which the alarm situation involves a high likelihood that the user leaves the building, for example if there is a fire alarm or the detection of an intrusion at a remote location of the building. The hand-over allows for example an operator at the operation center to remain in a continued personal contact with the user for providing appropriate advice, increasing the level of security for the user.

The user interface can comprise a presence detection unit, the presence detection unit being adapted for detecting the presence of predefined identifiers. Predefined identifiers can be key fobs, RFID chips or similar electronic devices which are assigned to a specific user. If a user disarms the alarm system with "his" key fob or chip, the user interface can provide a personalized message to the user.

The user interface can in particular be a screen, most preferably a touch screen. Such screen offers a great flexibility for interacting with the user allowing interactions ranging from the simple display of a system status or a text message over offering different options from which the user can choose, showing video sequences of the place where an alarm was triggered, to a live communication channel with an operator at an operation center.

Preferably, the user interface has a proximity detector for detecting the proximity of a user as this allows choosing the context-based reaction with higher precision.

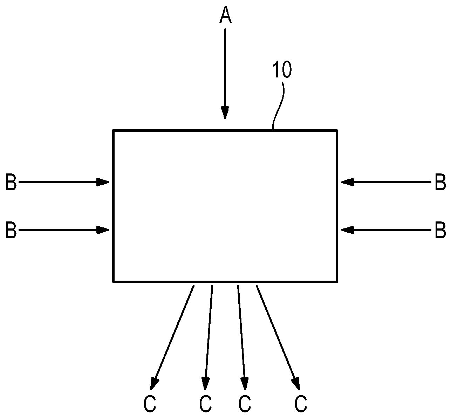

In the enclosed drawing, a control unit 10 is schematically shown. Arrow A symbolizes a signal from an intrusion detection device.

Arrows B symbolize other information which is available to control unit 10. This information can comprise
- The location of the particular intrusion detection device which sends the signal;
- the nature of the signal received from the intrusion detection device;
- the presence of a user at an interface unit;
- the lapse of predefined time periods;
- the lack of expected interactions within a predefined time period.

Arrows C symbolize different context-based reaction of control unit 10. These reactions can comprise:
- an alarm sound which is being emitted via a loudspeaker, the volume of the alarm sound being adapted to the particular situation (e.g. the volume of the alarm sound being reduced when the presence of a user is detected in the vicinity of the user interface);
- a text message displayed on a screen of the user interface;
- a voice message delivered via a loudspeaker;
- displaying a plurality of options at the user interface and an invitation to the user to click on one of the options;
- an activation of a camera and/or a microphone;
- a note which is being sent to a remote operation center;
- establishing a communication with an operator;
- emitting a distress call to a guard or an emergency service; an interaction with a predefined cell phone;
- a hand-over of the communication to a cell phone.

Within the scope of the invention, any possible combination of the options mentioned above can be implemented as one embodiment of the method and the alarm system according to the invention as defined in the claims.

## Claims

1. A method of operating an alarm system for a building, the method comprising the following steps:
- upon receipt of a signal from an intrusion detection device, a control unit starts a predefined time period within which a user is invited to disarm the alarm system,
- upon lapse of the predefined time period, when the alarm system is not disarmed within the predefined time period, the control unit chooses one of a plurality of predefined context-based reactions which depend from the particular intrusion detection device from which the signal was sent,
- the context-based reaction being the activation of a camera when a window sensor has sent the signal starting the predefined time period while the alarm system is in a state corresponding to "nobody at home", wherein the window sensor is a particular intrusion detection device associated with a window, and wherein activating the camera allows personal at a remote operation center to obtain additional information, wherein the control unit of the alarm system is connected to the remote operation center via internet and/or GSM.

2. The method of claim 1 wherein another context-based reaction is an alarm sound which is being emitted via a loudspeaker.

3. The method of claim 2 wherein the volume of the alarm sound is being reduced when the presence of a user is detected in the vicinity of the user interface.

4. The method of any of the preceding claims wherein the length of the time period depends from the particular intrusion detection device which sends the signal.

5. The method of any of the preceding claims wherein the invitation to the user to disarm the alarm system comprises a tone, which depends on the particular intrusion detection device which sends the signal.

6. The method of any of the preceding claims wherein the context-based reaction depends from the nature of the signal received from the intrusion detection device, wherein the nature of the signal differentiates between a "normal" signal and a signal indicating that there was an attempt to tamper with the sensor.

7. The method of any of the preceding claims wherein another context-based reaction is a text message displayed on a screen of the user interface.

8. The method of any of the preceding claims wherein another context-based reaction is a voice message delivered via a loudspeaker.

9. The method of claim 7 or claim 8 wherein the message is a personalized message.

10. The method of any of claims 7 to 9 wherein the message is a warning message.

11. The method of any of the preceding claims wherein another context-based reaction is displaying a plurality of options at the user interface and an invitation to the user to click on one of the options.

12. The method of any of the preceding claims wherein the context-based reaction is the activation of the camera and a microphone

13. The method of any of the preceding claims wherein another context-based reaction is a note which is being sent to a remote operation center.

14. The method of any of the preceding claims wherein another context-based reaction is establishing a communication with an operator.

15. The method of any of the preceding claims wherein another context-based reaction is emitting a distress call to a guard or an emergency service.

16. The method of any of the preceding claims wherein the control unit takes into account the signal from at least one additional sensor, e.g. a smoke detector, such that the likelihood that one or more of the another context-based reactions is appropriate to the particular situation is higher.

17. The method of any of the preceding claims wherein another context-based reaction depends from on the location of a particular intrusion detection device which sends the signal.

18. The method of any of the preceding claims wherein another context-based reaction is an interaction with a predefined cell phone.

19. The method of any of the preceding claims wherein another context-based reaction is a hand-over of the communication to a cell phone.

20. Alarm system for a building, having a control unit, a sound generating device, a user interface, a disarming interface, a camera and at least one intrusion detection device, in particular a window sensor, the control unit having a reaction strategy module receiving signals from at least the disarming interface, the user interface and the at least one intrusion detection device for choosing a context-based reaction strategy according to a method of any of the preceding claims, wherein upon receipt of a signal from the at least one intrusion detection device, the control unit starts a predefined period within which a user is invited to disarm the alarm system, wherein upon lapse of the predefined time period, when the alarm system is not disarmed within the predefined time period, the control unit chooses one of a plurality of predefined context-based reactions which depend from the particular intrusion detection device from which the signal was sent, and wherein the context-based reaction is the activation of a camera when a window sensor has sent the signal starting the predefined time period while the alarm system is in a state corresponding to "nobody at home", wherein the window sensor is a particular intrusion detection device associated with a window, and wherein activating the camera allows personal at a remote operation center to obtain additional information, wherein the control unit of the alarm system is connected to the remote operation center via internet and/or GSM.

21. The alarm system of claim 20 wherein the user interface comprises a presence detection unit, the presence detection unit being adapted for detecting the presence of pre-defined identifiers.

22. The alarm system of any of claims 20 and 21 wherein the user interface is a screen.

23. The alarm system of claim 22 wherein the screen is a touch screen.

24. The alarm system of any of claims 20 to 23 wherein the user interface has a proximity detector for detecting the proximity of a user.

25. Alarm installation comprising an alarm system as defined in any of claims 20 to 24 and the remote operation center.

## Patentansprüche

1. Verfahren zum Bedienen eines Alarmsystems für ein Gebäude, wobei das Verfahren die folgenden Schritte umfasst:
- nach Empfang eines Signals von einem Einbruchserkennungsgerät startet eine Steuerungseinheit einen vordefinierten Zeitraum, innerhalb dessen ein Benutzer dazu aufgefordert wird, das Alarmsystem zu entschärfen.
- nach Verstreichen des vordefinierten Zeitraums wählt die Steuerungseinheit, wenn das Alarmsystem nicht innerhalb des vordefinierten Zeitraums entschärft wurde, eine aus einer Vielzahl von vordefinierten kontextbasierten Reaktionen aus, die von dem speziellen Einbruchserkennungsgerät, von dem das Signal gesendet wurde, abhängen.
- wobei die kontextbasierte Reaktion die Aktivierung einer Kamera ist, wenn ein Fenstersensor das Signal gesendet hat, das den vordefinierten Zeitraum startet, während sich das Alarmsystem in einem Zustand befindet, der "niemand zu Hause" entspricht, wobei der Fenstersensor ein spezielles Einbruchserkennungsgerät ist, das mit einem Fenster verbunden ist, und wobei die Aktivierung der Kamera es dem Personal in einer Fernbedienungszentrale ermöglicht, zusätzliche Informationen zu erhalten, wobei die Steuerungseinheit des Alarmsystems über das Internet und/oder GSM mit der Fernbedienungszentrale verbunden ist.

2. Verfahren nach Anspruch 1, wobei eine weitere kontextbasierte Reaktion ein Alarmgeräusch ist, das über einen Lautsprecher ausgesendet wird.

3. Verfahren nach Anspruch 2, wobei die Lautstärke des Alarmgeräuschs reduziert wird, wenn die Anwesenheit eines Benutzers in der Nähe der Benutzerschnittstelle erkannt wird.

4. Verfahren nach einem der vorstehenden Ansprüche, wobei die Länge des Zeitraums von dem speziellen Einbruchserkennungsgerät, welches das Signal sendet, abhängt.

5. Verfahren nach einem der vorstehenden Ansprüche, wobei die Aufforderung an den Benutzer, das Alarmsystem zu entschärfen, einen Ton umfasst, der von dem speziellen Einbruchserkennungsgerät, welches das Signal sendet, abhängt.

6. Verfahren nach einem der vorstehenden Ansprüche, wobei die kontextbasierte Reaktion von der Art des vom Einbruchserkennungsgerät empfangenen Signals abhängt, wobei die Art des Signals zwischen einem "normalen" Signal und einem Signal unterscheidet, das angibt, dass ein Versuch unternommen wurde, den Sensor zu manipulieren.

7. Verfahren nach einem der vorstehenden Ansprüche, wobei eine weitere kontextbasierte Reaktion eine Textnachricht ist, die auf einem Bildschirm der Benutzerschnittstelle angezeigt wird.

8. Verfahren nach einem der vorstehenden Ansprüche, wobei eine weitere kontextbasierte Reaktion eine über einen Lautsprecher übermittelte Sprachnachricht ist.

9. Verfahren nach Anspruch 7 oder Anspruch 8, wobei die Nachricht eine personalisierte Nachricht ist.

10. Verfahren nach einem der Ansprüche 7 bis 9, wobei die Nachricht eine Warnnachricht ist.

11. Verfahren nach einem der vorstehenden Ansprüche, wobei eine weitere kontextbasierte Reaktion das Anzeigen einer Vielzahl von Optionen auf der Benutzerschnittstelle und eine Aufforderung an den Benutzer zum Anklicken einer der Optionen ist.

12. Verfahren nach einem der vorstehenden Ansprüche, wobei die kontextbasierte Reaktion die Aktivierung der Kamera und eines Mikrofons ist.

13. Verfahren nach einem der vorstehenden Ansprüche, wobei eine weitere kontextbasierte Reaktion ein Hinweis ist, der an eine Fernbedienungszentrale gesendet wird.

14. Verfahren nach einem der vorstehenden Ansprüche, wobei eine weitere kontextbasierte Reaktion das Herstellen einer Kommunikation mit einem Bediener ist.

15. Verfahren nach einem der vorstehenden Ansprüche, wobei eine weitere kontextbasierte Reaktion das Aussenden eines Notrufs an eine Wachperson oder einen Notdienst ist.

16. Verfahren nach einem der vorstehenden Ansprüche, wobei die Steuerungseinheit das Signal von mindestens einem zusätzlichen Sensor, z. B. einer Raucherkennungseinrichtung, berücksichtigt, sodass die Wahrscheinlichkeit, dass eine oder mehrere der anderen kontextbasierten Reaktionen für die spezielle Situation angemessen sind, höher ist.

17. Verfahren nach einem der vorstehenden Ansprüche, wobei eine weitere kontextbasierte Reaktion vom Standort eines speziellen Einbruchserkennungsgeräts, welches das Signal sendet, abhängt.

18. Verfahren nach einem der vorstehenden Ansprüche, wobei eine weitere kontextbasierte Reaktion eine Interaktion mit einem vordefinierten Mobiltelefon ist.

19. Verfahren nach einem der vorstehenden Ansprüche, wobei eine weitere kontextbasierte Reaktion eine Übergabe der Kommunikation an ein Mobiltelefon ist.

20. Alarmsystem für ein Gebäude, welches eine Steuerungseinheit, ein Geräuscherzeugungsgerät, eine Benutzerschnittstelle, eine Entschärfungsschnittstelle, eine Kamera und mindestens ein Einbruchserkennungsgerät, speziell einen Fenstersensor, aufweist, wobei die Steuerungseinheit ein Reaktionsstrategiemodul aufweist, das Signale von mindestens der Entschärfungsschnittstelle, der Benutzerschnittstelle und dem mindestens einen Einbruchserkennungsgerät empfängt, um eine kontextbasierte Reaktionsstrategie nach einem Verfahren nach einem der vorstehenden Ansprüche auszuwählen, wobei die Steuerungseinheit nach Empfang eines Signals von dem mindestens einen Einbruchserkennungsgerät einen vordefinierten Zeitraum startet, innerhalb dessen ein Benutzer aufgefordert wird, das Alarmsystem zu entschärfen, wobei nach Verstreichen des vordefinierten Zeitraums die Steuerungseinheit, wenn das Alarmsystem nicht innerhalb des vordefinierten Zeitraums entschärft wurde, eine aus einer Vielzahl von vordefinierten kontextbasierten Reaktionen auswählt, die von dem speziellen Einbruchserkennungsgerät abhängen, von dem das Signal gesendet wurde, und wobei die kontextbasierte Reaktion die Aktivierung einer Kamera ist, wenn ein Fenstersensor das Signal gesendet hat, das den vordefinierten Zeitraum startet, während sich das Alarmsystem in einem Zustand befindet, der "niemand zu Hause" entspricht, wobei der Fenstersensor ein spezielles Einbruchserkennungsgerät ist, das mit einem Fenster verbunden ist, und wobei die Aktivierung der Kamera es dem Personal in einer Fernbedienungszentrale ermöglicht, zusätzliche Informationen zu erhalten, wobei die Steuerungseinheit des Alarmsystems über das Internet und/oder GSM mit der Fernbedienungszentrale verbunden ist.

21. Alarmsystem nach Anspruch 20, wobei die Benutzerschnittstelle eine Anwesenheitserkennungseinheit umfasst, wobei die Anwesenheitserkennungseinheit dazu ausgelegt ist, die Anwesenheit vordefinierter Identifikatoren zu erkennen.

22. Alarmsystem nach einem der Ansprüche 20 und 21, wobei die Benutzerschnittstelle ein Bildschirm ist.

23. Alarmsystem nach Anspruch 22, wobei der Bildschirm ein Touchscreen ist.

24. Alarmsystem nach einem der Ansprüche 20 bis 23, wobei die Benutzerschnittstelle eine Nähe-Erkennungseinrichtung zum Erkennen der Nähe eines Benutzers aufweist.

25. Alarmanlage, die ein Alarmsystem nach einem der Ansprüche 20 bis 24 und die Fernbedienungszentrale umfasst.

## Revendications

1. Procédé de fonctionnement d'un système d'alarme de bâtiment, le procédé comprenant les étapes suivantes :
- à réception d'un signal provenant d'un dispositif de détection d'intrusion, une unité de contrôle démarre une période de temps prédéfinie pendant laquelle l'utilisateur est invité à désarmer le système d'alarme,
- à expiration de la période de temps prédéfinie, lorsque le système d'alarme n'est pas désarmé pendant la période de temps prédéfinie, l'unité de contrôle choisit l'une parmi une pluralité de réactions contextuelles prédéfinies qui dépendent du dispositif de détection d'intrusion particulier à partir duquel le signal a été envoyé,
- la réaction contextuelle étant l'activation d'une caméra lorsqu'un capteur de fenêtre a envoyé le signal démarrant la période de temps prédéfinie pendant laquelle le système d'alarme est dans un état correspondant à « personne à la maison », dans lequel le capteur de fenêtre est un dispositif de détection d'intrusion particulier associé à une fenêtre, et dans lequel l'activation de la caméra permet au personnel au niveau d'un centre d'opérations distant d'obtenir des informations supplémentaires, dans lequel l'unité de contrôle du système d'alarme est connectée au centre d'opérations distant via Internet et/ou GSM.

2. Procédé selon la revendication 1, dans lequel une autre réaction contextuelle consiste en un son d'alarme qui est émis via un haut-parleur.

3. Procédé selon la revendication 2, dans lequel le volume du son d'alarme est réduit lorsque la présence d'un utilisateur est détectée au voisinage de l'interface utilisateur.

4. Procédé selon l'une quelconque des revendications précédentes, dans lequel la longueur de la période de temps dépend du dispositif de détection d'intrusion particulier qui envoie le signal.

5. Procédé selon l'une quelconque des revendications précédentes, dans lequel l'invitation faite à l'utilisateur de désarmer le système d'alarme comprend une tonalité, qui dépend du dispositif de détection d'intrusion particulier qui envoie le signal.

6. Procédé selon l'une quelconque des revendications précédentes, dans lequel la réaction contextuelle dépend de la nature du signal reçu du dispositif de détection d'intrusion, dans lequel la nature du signal fait la distinction entre un signal « normal » et un signal indiquant qu'il y a eu une tentative de trafiquer le capteur.

7. Procédé selon l'une quelconque des revendications précédentes, dans lequel une autre réaction contextuelle est un message texte affiché sur un écran de l'interface utilisateur.

8. Procédé selon l'une quelconque des revendications précédentes, dans lequel une autre réaction contextuelle est un message vocal délivré via un haut-parleur.

9. Procédé selon la revendication 7 ou la revendication 8 dans lequel le message est un message personnalisé.

10. Procédé selon l'une quelconque des revendications 7 à 9 dans lequel le message est un message d'avertissement.

11. Procédé selon l'une quelconque des revendications précédentes dans lequel une autre réaction contextuelle est l'affichage d'une pluralité d'options au niveau de l'interface utilisateur et une invitation faite à l'utilisateur de cliquer sur l'une des options.

12. Procédé selon l'une quelconque des revendications précédentes dans lequel la réaction contextuelle est l'activation de la caméra et d'un microphone.

13. Procédé selon l'une quelconque des revendications précédentes, dans lequel une autre réaction contextuelle est une note qui est envoyée à un centre d'opérations distant.

14. Procédé selon l'une quelconque des revendications précédentes, dans lequel une autre réaction contextuelle établit une communication avec un opérateur.

15. Procédé selon l'une quelconque des revendications précédentes dans lequel une autre réaction contextuelle est l'émission d'un appel de détresse à destination d'un garde ou d'un service d'urgence.

16. Procédé selon l'une quelconque des revendications précédentes dans lequel l'unité de contrôle prend en compte le signal provenant d'au moins un capteur supplémentaire, par exemple d'un détecteur de fumée, de sorte que la probabilité qu'une ou plusieurs parmi les autres réactions contextuelles soient appropriées à la situation particulière est plus élevée.

17. Procédé selon l'une quelconque des revendications précédentes, dans lequel une autre réaction contextuelle dépend de l'emplacement d'un dispositif de détection d'intrusion particulier qui envoie le signal.

18. Procédé selon l'une quelconque des revendications précédentes dans lequel une autre réaction contextuelle est une interaction avec un téléphone portable prédéfini.

19. Procédé selon l'une quelconque des revendications précédentes dans lequel une autre réaction contextuelle est un transfert de la communication vers un téléphone portable.

20. Système d'alarme de bâtiment, ayant une unité de contrôle, un dispositif de génération de son, une interface utilisateur, une interface de désarmement, une caméra et au moins un dispositif de détection d'intrusion, en particulier un capteur de fenêtre, l'unité de contrôle ayant un module de stratégie de réaction recevant des signaux provenant au moins de l'interface de désarmement, de l'interface utilisateur et de l'au moins un dispositif de détection d'intrusion pour choisir une stratégie de réaction contextuelle conformément à un procédé selon l'une quelconque des revendications précédentes, dans lequel à réception d'un signal provenant de l'au moins un dispositif de détection d'intrusion, l'unité de contrôle démarre une période de temps prédéfinie pendant laquelle un utilisateur est invité à désarmer le système d'alarme, dans lequel si le système d'alarme n'est pas désarmé pendant la période de temps prédéfinie, l'unité de contrôle choisit l'une d'une pluralité de réactions contextuelles prédéfinies qui dépendent du dispositif de détection d'intrusion à partir duquel le signal a été envoyé, et dans lequel la réaction contextuelle est l'activation d'une caméra lorsqu'un capteur de fenêtre a envoyé le signal déclenchant la période de temps prédéfinie alors que le système d'alarme est dans un état correspondant à « personne à la maison », dans lequel le capteur de fenêtre est un dispositif de détection d'intrusion particulier associé à une fenêtre, et dans lequel l'activation de la caméra permet au personnel au niveau d'un centre d'opérations distant d'obtenir des informations supplémentaires, dans lequel l'unité de contrôle du système d'alarme est connectée au centre d'opérations distant via Internet et/ou GSM.

21. Système d'alarme selon la revendication 20, dans lequel l'interface utilisateur comprend une unité de détection de présence, cette unité étant adaptée pour détecter la présence d'identifiants prédéfinis.

22. Système d'alarme selon l'une quelconque des revendications 20 et 21, dans lequel l'interface utilisateur est un écran.

23. Système d'alarme selon la revendication 22, dans lequel l'écran est un écran tactile.

24. Système d'alarme selon l'une quelconque des revendications 20 à 23, dans lequel l'interface utilisateur a un détecteur de proximité pour détecter la proximité d'un utilisateur.

25. Installation d'alarme comprenant un système d'alarme tel que défini dans l'une quelconque des revendications 20 à 24 et le centre d'opérations distant.
